# EUROPÄISCHE PATENTANMELDUNG

(11) **EP 4 819 660 A1**
(43) Veröffentlichungstag der Anmeldung: **07.10.2026**
(21) Anmeldenummer: 26167548.2
(22) Anmeldetag: 25.03.2026
(51) Int. Cl.: H04W 12/06, H04W 12/47, B67C 3/00, H04L 9/40

(54) **VERFAHREN UND SYSTEM ZUM AUTHENTIFIZIEREN EINES BENUTZERS MIT EINEM MOBILEN GERÄT BEI EINER BEHÄLTERBEHANDLUNGSVORRICHTUNG**

(30) Priorität: 31.03.2025 DE 102025112401
(71) Anmelder: KHS GmbH, 44143 Dortmund (DE)
(72) Erfinder: Brill, Torben, 44143 Dortmund (DE); Schürmann, Sven, 44143 Dortmund (DE)

(57) **Zusammenfassung**

Die Erfindung betrifft u.a. ein Verfahren zum Authentifizieren eines Benutzers (16) mit einem mobilen Gerät (14) bei einer Behälterbehandlungsvorrichtung (10). Das Verfahren umfasst ein Erzeugen einer Anfrage (42) für einen Zugriff auf die Behälterbehandlungsvorrichtung (10) durch ein mobiles Gerät (14), ein Herstellen einer ersten Verbindung (44) zwischen einem mobilen Gerät (14) und einem Benutzerverwaltungsserver (12) über das Internet, ein Senden der Anfrage (42) an den Benutzerverwaltungsserver (12) und ein Erzeugen eines Tokens (62) in Abhängigkeit von der Anfrage (42) mit dem Benutzerverwaltungsserver (12), ein Empfangen des erzeugten Tokens (62) über die erste Verbindung (44) vom Benutzerverwaltungsserver (12) durch das mobile Gerät (14), ein Speichern des Tokens (62) im mobilen Gerät (14), ein Übertragen des gespeicherten Tokens (62) durch das mobile Gerät (14) an die Behälterbehandlungsvorrichtung (10) über eine zweite Verbindung (66) zwischen dem mobilen Gerät (14) und der Behälterbehandlungsvorrichtung (10), wobei die zweite Verbindung (66) sich von der ersten Verbindung (44) unterscheidet und ein Authentifizieren des Benutzers (16) mit dem übertragenen Token (62) bei der Behälterbehandlungsvorrichtung (10).

## Beschreibung

Die Erfindung betrifft den Bereich von Zugriffen auf Behälterbehandlungsvorrichtungen durch einen Benutzer und die dafür benötigte Authentifizierung des Benutzers.

Behälterbehandlungsvorrichtungen sind solche Vorrichtungen oder Maschinen, die zur Bearbeitung von Behältern oder Hohlkörpern für ein Füllgut verwendet werden. Behälterbehandlungsvorrichtungen umfassen demnach Vorrichtungen oder Maschinen zum Umformen von Hohlkörpern, wie etwa Vorformlingen, zur Herstellung von Behältern, zur Bereitstellung von Getränken sowie auch solche Vorrichtungen, die zum Abfüllen und Etikettieren solcher Behälter dienen.

Im Stand der Technik ist es bekannt, dass als Vorformlinge bezeichnete Hohlkörper durch ein Urformverfahren, wie etwa ein Spritzgießverfahren, aus einem thermoplastischen Kunststoff hergestellt werden. Derartige Vorformlinge dienen als Rohlinge für die Herstellung von Behältern, wie Kunststoffflaschen, um Getränke bereitzustellen.

Die Vorformlinge werden demnach zunächst mit einer Behälterbehandlungsvorrichtung bearbeitet, wobei die Bearbeitung zunächst eine Temperaturkonditionierung umfasst. Bei der Temperaturkonditionierung werden die Vorformlinge auf eine für die Umformung geeignete Temperatur mit Heizelementen der Behälterbehandlungsvorrichtung gebracht. Im Anschluss werden die Vorformlinge in einem weiteren Schritt mit der oder einer weiteren Behälterbehandlungsvorrichtung umgeformt. Dies erfolgt beispielsweise in einem Blasformverfahren, bei dem die zuvor temperierten Vorformlinge gegen eine äußere Form aufgeweitet werden. In weiteren Prozessschritten, die von der oder den genannten oder einer oder mehreren wiederum weiteren Behälterbehandlungsvorrichtungen ausgeführt werden, werden die so erhaltenen Behälter mit einer Flüssigkeit, beispielweise einem Getränk, befüllt, etikettiert und in Gebinden bereitgestellt. All diese Schritte erfolgen also mit einzelnen oder kombinierten Behälterbehandlungsvorrichtungen.

Die Behälterbehandlungsvorrichtungen umfassen meist jeweils eine eigene Steuerung zum Steuern der jeweiligen Prozessschritte der Behälterbehandlungsvorrichtung. Im Fall mehrerer Behälterbehandlungsvorrichtungen, die als Produktionslinie zusammengeschaltet sind, kann eine übergeordnete Steuerung vorgesehen sein, um eine Koordination der jeweils von den einzelnen Behälterbehandlungsvorrichtungen ausgeführten Schritten auszuführen und Abläufe zu überwachen. Meist umfasst jedoch jede Behälterbehandlungsvorrichtung, auch, wenn eine übergeordnete Steuerung vorgesehen ist, eine eigene Steuerung mit einer Benutzerschnittstelle.

Einer Behälterbehandlungsvorrichtung oder mehreren in einer Bearbeitungslinie, die auch als Produktionslinie bezeichnet werden kann, zusammengefassten Behälterbehandlungsvorrichtungen ist jeweils wenigstens ein Maschinenbediener, der auch Operator oder allgemein Benutzer genannt wird, zugeordnet. Operatoren sind verantwortlich für die Bedienung und ggf. Wartung der Behälterbehandlungsvorrichtung und stellen sicher, dass die Behälterbehandlungsvorrichtung ordnungsgemäß und sicher funktioniert. Hierzu ist es nötig, dass Operatoren auf Steuerungen der Behälterbehandlungsvorrichtungen über deren Benutzerschnittstellen zugreifen, um beispielsweise Betriebszustände oder Parameter anzupassen oder zu prüfen. Ein solcher Zugriff ist beispielsweise dann nötig, wenn ein Produktwechsel des Füllguts oder eine Flaschenform wechselt oder der Operator Fehlverhalten der Behälterbehandlungsvorrichtung erkennt.

In einer Produktionsstätte, in der Behälterbehandlungsvorrichtungen oder Behälterbehandlungsvorrichtungslinien die Produktion ausführen, sind neben den Operatoren auch Personen beschäftigt, die keinen Zugriff auf die Steuerungen erhalten sollen, um Manipulation oder Fehlbedienungen auszuschließen. Somit ist es nötig, dass die Steuerungen oder Benutzerschnittstellen der Steuerungen vor unzulässigen Zugriffen geschützt sind. Es ist dabei beispielsweise bekannt, dass vom Operator ein Tupel, umfassend ein Passwort und eine Benutzerkennung, an einer Steuerung der Behälterbehandlungsvorrichtung eingegeben werden muss, um einen Zugriff auf die Steuerung zu erhalten. Steuer- und/oder Lesezugriffe können so erlaubt werden.

Eine solche Lösung ist unflexibel, insbesondere, wenn ein Operator wechselt oder vertreten werden muss, da Benutzerkennung und Passwort sowie die zugehörigen Zugriffsrechte meist in der Behälterbehandlungsvorrichtung selbst als Benutzerkonto hinterlegt sind. In diesem Fall könnten die Benutzerkennung und das Passwort beispielsweise an einen Operator, der eine Vertretung übernimmt, weitergegeben werden oder ein Operator könnte auch nach dem Wechsel noch berechtigt sein, wodurch die Gefahr erhöht wird, dass unberechtigte Personen, die einmal Kenntnis von dem Benutzernamen und dem Passwort erlangt haben, Zugriff auf die Behälterbehandlungsvorrichtung behalten, auch wenn diese nicht mehr berechtigt sein sollen. In der Steuerung müssen demnach regelmäßig Benutzerkonten gelöscht werden. Werden Benutzername und Kennwort nicht weitergegeben, so muss kurzfristig, beispielsweise im Vertretungsfall, für einen neuen Operator zunächst in der Steuerung ein Benutzerkonto angelegt werden. Beim Ausscheiden eines Mitarbeiters muss entsprechend das Benutzerkonto gelöscht werden.

Um dem zu begegnen, wird im Dokument DE 10 2021 127 963 A1 vorgeschlagen, ein zentrales Rechtezuweisungssystem bereitzustellen, mit dem flexibler Zugriffsrechte verwaltet werden können. Das Dokument beschreibt demnach, dass Behälterbehandlungsvorrichtungen eine Benutzerschnittstelle aufweisen, um von einem Nutzer ein Identifikationselement und ein Nutzerpasswort zu empfangen. Von der Behälterbehandlungsvorrichtung wird dann das Identifikationselement oder das Nutzerpasswort an das zentrales Rechtezuweisungssystem gesendet, das in Abhängigkeit von diesen Daten Zugriffsdaten zurück an die Behälterbehandlungsvorrichtung sendet und die Behälterbehandlungsvorrichtung in Abhängigkeit von den Zugriffsdaten Zugriffsrechte für einen Nutzer gewährt.

Diese Möglichkeit, einem Nutzer Zugriffsrechte zu gewähren, erfordert jedoch, dass die einzelnen Behälterbehandlungsvorrichtungen direkt mit dem Rechtezuweisungssystem kommunikativ verbunden sein müssen, um das Identifikationselement und das Nutzerpasswort zu senden und die Zugriffsdaten zu empfangen. Eine hierfür benötigte Kommunikationsverbindung stellt jedoch, insbesondere im Fall, dass diese über eine Internetverbindung hergestellt wird, ein Sicherheitsrisiko für die Behälterbehandlungsvorrichtungen dar, insbesondere, wenn das zentrale Rechtezuweisungssystem für mehrere Betriebsstätten bereitgestellt ist. Eine für die Kommunikationsverbindung so bereitgestellte Schnittstelle auf die Behälterbehandlungsvorrichtungen, stellt nämlich einen zusätzlichen Angriffspunkt durch eine Vielzahl von Personen auf die Behälterbehandlungsvorrichtung dar, die nicht vor Ort bei der Behälterbehandlungsvorrichtung sind. Somit besteht insbesondere durch eine angreifbare Internetverbindung eine erhöhte Gefahr, dass unberechtigte Personen Zugriff auf die Behälterbehandlungsvorrichtung erlangen.

Aufgabe der vorliegenden Erfindung ist es, den Problemen des Standes der Technik zu begegnen. Insbesondere soll eine Möglichkeit gefunden werden, um flexibel Zugriffsrechte für Operatoren verwalten zu können und gleichzeitig auf eine Schnittstelle zwischen einer Behälterbehandlungsvorrichtung und einem Rechtezuweisungssystem zu verzichten. Jedenfalls soll eine Alternative zum aus dem Stand der Technik Bekannten gefunden werden.

Die Erfindung betrifft hierzu ein Verfahren zum Authentifizieren eines Benutzers mit einem mobilen Gerät bei einer Behälterbehandlungsvorrichtung nach Anspruch 1.

Demnach wird ein Verfahren zum Authentifizieren eines Benutzers bei einer Behälterbehandlungsvorrichtung vorgeschlagen, das mit einem mobilen Gerät ausgeführt wird. Zunächst wird mit dem mobilen Gerät, das beispielsweise ein Mobiltelefon, ein tragbarer Computer oder ein Tablet-PC ist, eine Anfrage für einen Zugriff auf die Behälterbehandlungsvorrichtung erzeugt. Die Anfrage umfasst einen, insbesondere genau einen, Personenidentifikator zur eindeutigen Identifikation des Benutzers des mobilen Geräts oder zumindest des mobilen Geräts. Der Personenidentifikator ist beispielsweise bereits im mobilen Gerät hinterlegt und entspricht einem alphanumerischen Code, der das mobile Gerät eindeutig identifiziert.

Der Personenidentifikator kann vorzugsweise auch von einem Benutzer hinterlegt sein, beispielsweise indem der Benutzer sich gegenüber dem mobilen Gerät authentifiziert hat, beispielsweise durch ein Tupel aus Benutzerkennung und Passwort, und beispielsweise in Abhängigkeit von den Daten zur Authentifizierung des Benutzers ein entsprechender Personenidentifikator im mobilen Gerät erzeugt und hinterlegt wird. Beispielsweise kann ein mobiles Gerät, wie ein Tablet-PC oder ein Mobiltelefon, mit einer Applikation ausgestattet sein, die es einem Benutzer erlauben, über eine Schnittstelle Daten zur Authentifizierung des Benutzers einzugeben. Die Applikation erzeugt aus diesen Daten dann den Personenidentifikator. Das heißt, jedes Mal, wenn ein Benutzer dieselben Daten zur Authentifizierung des Benutzers eingibt, wird aus diesen Daten der identische Personenidentifikator erzeugt. Ein Benutzer kann bevorzugt auch ein Benutzerkonto in einer Applikation für das Verfahren, die im mobilen Gerät ausgeführt wird, anlegen oder zugewiesen bekommen, wobei sich der Benutzer bei seinem Benutzerkonto mit einer Benutzerkennung und einem Passwort authentifiziert und danach den Personenidentifikator für das Benutzerkonto, beispielsweise durch manuelle Eingabe, einpflegt.

Der Personenidentifikator wird dann in die Anfrage integriert oder die Anfrage in Abhängigkeit von diesem Personenidentifikator erzeugt.

Darüber hinaus umfasst die Anfrage Zugriffsinformationen mit einem, insbesondere genau einem, Anlagenidentifikator zur eindeutigen Identifikation der Behälterbehandlungsvorrichtung. Der Anlagenidentifikator identifiziert damit eindeutig die Behälterbehandlungsvorrichtung, bei der sich ein Benutzer authentifizieren möchte, um einen Zugriff zu erhalten.

In einem nächsten Schritt wird eine erste Verbindung zwischen dem mobilen Gerät und einem Benutzerverwaltungsserver über das Internet hergestellt. Der Benutzerverwaltungsserver kann auch als zentrales Rechtezuweisungssystem bezeichnet werden. Im nächsten Schritt wird die Anfrage vom mobilen Gerät an den Benutzerverwaltungsserver gesendet und mit dem Benutzerverwaltungsserver ein Token in Abhängigkeit von der Anfrage erzeugt. Der Token entspricht einem elektronischen Token, der auch als elektronischer Schlüssel bezeichnet werden kann. Der erzeugte Token wird dann über die erste Verbindung vom Benutzerverwaltungsserver an das mobile Gerät gesendet und durch das mobile Gerät empfangen. Der Token wird darauf im mobilen Gerät gespeichert.

Ferner umfasst das Verfahren das Übertragen des gespeicherten Tokens durch das mobile Gerät an die Behälterbehandlungsvorrichtung über eine zweite Verbindung zwischen dem mobilen Gerät und der Behälterbehandlungsvorrichtung. Die zweite Verbindung unterscheidet sich von der ersten Verbindung. Vorzugsweise ist die zweite Verbindung so gesichert, dass die zweite Verbindung keine Kommunikation mit dem Benutzerverwaltungsserver und/oder dem Internet herstellen kann. Vorzugsweise ist die zweite Verbindung eine direkte Verbindung zwischen dem mobilen Gerät und der Behälterbehandlungsvorrichtung, auf die kein weiteres Gerät oder keine weitere Vorrichtung einen Zugriff hat. Die zweite Verbindung stellt jedenfalls vorzugsweise keine Verbindung unter Verwendung des Internets her und ist auch vor einem Zugriff auf die zweite Verbindung aus dem Internet gesichert. Es ist somit keine Kommunikationsmöglichkeit zwischen dem Internet und der zweiten Verbindung möglich.

Ferner umfasst das Verfahren das Authentifizieren des Benutzers mit dem übertragenen Token bei der Behälterbehandlungsvorrichtung. Nach einer Authentifizierung wird dem Benutzer vorzugsweise in Abhängigkeit von dem Token ein Zugriffsrecht eingeräumt, so dass der Benutzer auf die Behälterbehandlungsvorrichtung zugreifen kann.

Demnach ist ein Benutzerverwaltungsserver vorgesehen, der vorzugsweise mit unterschiedlichen mobilen Geräten über eine erste Verbindung verbunden werden kann, um entsprechende Anfragen von den mobilen Geräten zu empfangen und in Abhängigkeit von der Anfrage Token zurückzuschicken. Die erste Verbindung erfolgt über das Internet, so dass der Benutzerverwaltungsserver entfernt von der Behälterbehandlungsvorrichtung und dem mobilen Gerät angeordnet sein kann. Vorzugsweise ist ein Benutzerverwaltungsserver für eine Vielzahl von Behälterbehandlungsvorrichtungen, die in einer Vielzahl von unterschiedlichen Behälterbehandlungslinien auch örtlich getrennt angeordnet sein können, vorgesehen, um Token für die Vielzahl von unterschiedlichen Behälterbehandlungslinien bereitzustellen. Der Benutzerverwaltungsserver kann beispielsweise in einem Herstellernetzwerk eines Herstellers der Behälterbehandlungsvorrichtung vorgesehen und für die Authentifizierung von Benutzern aller Behälterbehandlungsvorrichtungen des Herstellers ausgebildet sein.

Ein direkter Zugriff von der oder den jeweiligen Behälterbehandlungsvorrichtungen auf den Benutzerverwaltungsserver, um Token oder Zugriffsrechte zu empfangen, ist jedoch nicht möglich und auch nicht nötig, da das mobile Gerät einen Token vom Benutzerverwaltungsserver empfängt, mit dem dann das mobile Gerät über eine weitere Verbindung, nämlich die zweite Verbindung, einen Benutzer bei der Behälterbehandlungsvorrichtung authentifizieren kann.

Durch den Benutzerverwaltungsserver ist eine hohe Flexibilität des Systems gegeben, um Rechte oder Zugriffsrechte einer Vielzahl von Benutzern an einer zentralen Stelle zu verwalten. Eine hohe Flexibilität ist somit geschaffen. Gleichzeitig ist die Behälterbehandlungsvorrichtung durch Zugriffe über Schnittstellen, die einen Zugriff von Außerhalb, beispielsweise über das Internet, ermöglichen, geschützt, da die Behälterbehandlungsvorrichtung nicht unmittelbar mit dem Benutzerverwaltungsserver verbunden ist. Ein flexibles sicheres Verfahren zum Authentifizieren eines Benutzers ist somit geschaffen.

Gemäß einer ersten Ausführungsform ist die zweite Verbindung eine RFID-Kommunikationsverbindung, die insbesondere einer NFC-Kommunikationsverbindung entspricht. Demnach erfolgt das Übertragen des Tokens mittels der RFID-Kommunikationsverbindung oder vorzugsweise der NFC-Kommunikationsverbindung zwischen dem mobilen Gerät und der Behälterbehandlungsvorrichtung. Eine RFID-Kommunikationsverbindung entspricht einer auf RFID-Technik basierenden Kommunikationsverbindung und die NFC-Kommunikationsverbindung entspricht einem Übertragungsstandard, nämlich dem Near-Field-Communication-Standard, der die RFID-Technik nutzt.

Durch eine RFID-Kommunikationsverbindung ist sichergestellt, dass das mobile Gerät vor Ort im Bereich der Behälterbehandlungsvorrichtung sein muss, um den Token zu übertragen. Insbesondere ist durch das Übertragen des Tokens über die RFID-Kommunikationsverbindung sichergestellt, dass die Behälterbehandlungsvorrichtung keine Schnittstelle bereitstellen muss, um den Token zu empfangen, die aus weiter Ferne angreifbar ist. Der Personenkreis, der auf die Behälterbehandlungsvorrichtung zugreifen kann, wird somit auf Personen beschränkt, die vor Ort der Behälterbehandlungsvorrichtung sind oder sein können. Ein Authentifizieren eines Benutzers wird somit noch sicherer gestaltet.

Gemäß einer weiteren Ausführungsform werden die Zugriffsinformationen von der Behälterbehandlungsvorrichtung für das mobile Gerät bereitgestellt, um die Anfrage mit den Zugriffsinformationen zu erzeugen. Die Zugriffsinformationen umfassen insbesondere den Anlagenidentifikator zum Erzeugen der Anfrage. Die Zugriffsinformationen werden vom mobilen Gerät vor dem Erzeugen der Anfrage von der Behälterbehandlungsvorrichtung durch das mobile Gerät vorzugsweise elektronisch ausgelesen. Gemäß einer Alternative kann ein Benutzer die von der Behälterbehandlungsvorrichtung bereitgestellten Zugriffsinformationen manuell in das mobile Gerät eingeben.

Hat somit ein Benutzter bislang keinen Token zur Authentifizierung bei einer bestimmten Behälterbehandlungsvorrichtung im mobilen Gerät gespeichert und benötigt einen Zugriff auf diese bestimmte Behälterbehandlungsvorrichtung, kann der Benutzer die Zugriffsinformationen direkt von der Behälterbehandlungsvorrichtung ab- oder auslesen, auf die der Zugriff gewünscht ist und daher eine Authentifizierung des Benutzers notwendig wird.

Insbesondere durch ein elektronisches Auslesen der Zugriffsinformationen von der Behälterbehandlungsvorrichtung wird so auf schnelle Weise eine korrekte Anfrage mit dem mobilen Gerät erzeugbar. Das Verfahren ermöglicht somit eine Vereinfachung bei der Handhabung der Authentifizierung für den Benutzer.

Gemäß einer weiteren Ausführungsform umfassen die Zugriffsinformationen benötigte Zugriffsrechte auf die Behälterbehandlungsvorrichtung. Benötigte Zugriffsrechte beschreiben Zugriffsrechte, die benötigt werden, um auf die Behälterbehandlungsvorrichtung zuzugreifen. Vorzugsweise werden die benötigten Zugriffsrechte in Abhängigkeit von einer Benutzereingabe des Benutzers bestimmt und als Teil der Zugriffsinformationen bereitgestellt. Die benötigten Zugriffsrechte können sich vorzugsweise in Abhängigkeit von unterschiedlichen Benutzereingaben unterscheiden. Kommt demnach ein Benutzer zu einer Behälterbehandlungsvorrichtung, für die der Benutzer keinen Token in seinem mobilen Gerät bereitgestellt hat, so kann er mit einer Benutzereingabe bei der Behälterbehandlungsvorrichtung, insbesondere in die Steuerung oder eine Schnittstelle der Steuerung der Behälterbehandlungsvorrichtung, eingeben, auf welchen Bereich der Funktionen oder Software ein Zugriff auf die Behälterbehandlungsvorrichtung gewünscht ist. Dies können beispielsweise einfache Lesezugriffe auf bestimmte Speicherbereiche, aber auch Schreibzugriffe zum Verändern von bestimmten Parametern sein. In Abhängigkeit von dieser Eingabe erzeugt dann die Behälterbehandlungsvorrichtung, insbesondere die Steuerung der Behälterbehandlungsvorrichtung, entsprechend benötigte Zugriffsrechte, also Zugriffsrechte, die benötigt werden, um die gewünschten Zugriffe auszuführen. Die benötigten Zugriffsrechte werden dann in Form der Zugriffsinformationen zusammen mit dem Anlagenidentifikator bereitgestellt und vorzugsweise vom mobilen Gerät elektronisch ausgelesen, um zusammen mit dem Personenidentifikator die Anfrage zu bilden oder zu erzeugen.

Gemäß einer weiteren Ausführungsform werden die Zugriffsinformationen mit einem digitalen Informationsträger, der vorzugsweise einem Barcode entspricht, durch die Behälterbehandlungsvorrichtung bereitgestellt oder angezeigt. Vorzugsweise ist der digitale Informationsträger unmittelbar an der Behälterbehandlungsvorrichtung angeordnet. Die Zugriffsinformationen werden vorzugsweise mit einer Anzeige der Behälterbehandlungsvorrichtung, vorzugsweise mit einer Steuerung der Behälterbehandlungsvorrichtung, angezeigt. Der digitale Informationsträger kann beispielsweise ein Strichcode sein oder ein zweidimensionaler Code, der auch als Flächencode bezeichnet werden kann. Der zweidimensionale Code kann auch als Matrixcode oder Matrixbarcode bezeichnet werden. Ein einfaches Auslesen der Zugriffsinformationen ist somit für den Benutzer mit seinem mobilen Gerät, beispielsweises mit einer Kamera des mobilen Geräts, möglich.

Gemäß einer weiteren Ausführungsform ist im Benutzerverwaltungsserver ein Speicher bereitgestellt, in dem mehrere Einträge hinterlegbar oder hinterlegt sind. Vorzugsweise werden die Einträge von einer berechtigten Person hinterlegt. Die berechtigte Person ist eine Person, die sich durch eine Authentifizierung gegenüber dem Benutzerverwaltungsserver als berechtigte Person identifizieren kann. Diese berechtigte Person kann vorzugsweise Einträge anlegen, löschen und/oder ändern.

In jedem der Einträge sind jeweils einem Personenidentifikator ein oder mehrere, beispielsweise benutzerbasierte oder gruppenbasierte, Zugriffsrechte für eine oder jeweils für mehrere Anlagenidentifikatoren zugewiesen. Das heißt, ein Eintrag umfasst einen Personenidentifikator und mindestens einen Anlagenidentifikator sowie benutzerbasierte oder gruppenbasierte Zugriffsrechte auf die Behälterbehandlungsvorrichtung, die durch den Anlagenidentifikator des Eintrags identifiziert ist. Durch einen Eintrag wird somit festgelegt, welche Zugriffsrechte eine Person mit dem Personenidentifikator auf eine Behälterbehandlungsvorrichtung mit dem Anlagenidentifikator des Eintrags hat. Diese Zugriffsrechte können benutzerbasierte Zugriffsrechte sein, die direkt für die Person, der der Personenidentifikator zugeordnet ist, angepasst sind oder gruppenbasierte Zugriffsrechte sein, die die Person einer Gruppe zuordnet, für die bestimmte Zugriffsrechte auf die Behälterbehandlungsvorrichtung mit dem Anlagenidentifikator des Eintrags festgelegt sind.

Das Erzeugen eines Tokens in Abhängigkeit von der Anfrage umfasst ferner das Prüfen mit dem Benutzerverwaltungsserver, ob für den in der Anfrage enthaltenen Personenidentifikator im Speicher ein Eintrag vorhanden ist, der dem Personenidentifikator ein oder mehrere Zugriffsrechte für den in den Zugriffsinformationen enthaltenen Anlagenidentifikator zuweist, die den in den Zugriffsinformationen enthaltenen benötigten Zugriffsrechten entsprechen. Es findet somit ein Abgleich zwischen der Anfrage und den Einträgen oder einer Suche eines zur Anfrage passenden Eintrags statt. Es wird also geprüft, ob ein Eintrag vorhanden ist, der einen Personenidentifikator aufweist, in dem einem Anlagenidentifikator die Zugriffsrechte zugewiesen werden, die den benötigten Zugriffsrechten für den Anlagenidentifikator in der Anfrage entsprechen.

Ferner umfasst das Erzeugen eines Tokens in Abhängigkeit von der Anfrage, das Erzeugen des Tokens, wenn das Prüfen positiv ist und vorzugsweise das Nichterzeugen des Tokens, wenn die Prüfung negativ ist. Das Prüfen ist positiv, wenn ein entsprechender zur Anfrage passender Eintrag vorhanden ist und das Prüfen ist negativ, wenn die benötigten Zugriffsrechte in der Anfrage nicht den Zugriffsrechten entsprechen, die einem Personenidentifikator für den Anlagenidentifikator zugewiesen sind, möglicherweise gar kein Eintrag für den Personenidentifikator vorhanden ist oder nur Einträge mit dem Personenidentifikator für andere Anlagenidentifikatoren als in der Anfrage vorhanden sind.

Gemäß einer besonderen Ausführungsform kann im Fall einer negativen Prüfung die berechtigte Person eine Nachricht, beispielsweise eine E-Mail oder eine Textnachricht, erhalten, so dass die berechtigte Person entscheiden kann, einen entsprechenden Eintrag zu erzeugen, so dass bei einer erneuten Prüfung der Eintrag dann vorhanden ist und die Prüfung positiv wird.

Die Einträge im Benutzerverwaltungsserver können vorzugsweise nur durch eine berechtigte Person geändert, gelöscht oder neu erstellt werden. Der Benutzerverwaltungsserver ist demnach insbesondere gegen Schreibzugriffe durch unberechtigte Personen gesichert.

Es werden somit nur Token für derartige Benutzer erstellt, die eine der Anfrage entsprechende Berechtigung durch einen Eintrag haben.

Gemäß einer weiteren Ausführungsform ist im Benutzerverwaltungsserver in jedem Eintrag eine Gültigkeitsdauer oder ein Ablaufdatum für den Personenidentifikator des Eintrags hinterlegt. Wenn das Prüfen positiv ist und ein Token erzeugt wird, wird dieser mit der hinterlegten Gültigkeitsdauer oder dem Ablaufdatum erzeugt. Ein von dem Benutzerverwaltungsserver erzeugter Token weist somit immer einen Zeitraum oder einen Zeitablauf auf, für den beziehungsweise bis zu dem der Token zur Authentifizierung an einer Behälterbehandlungsvorrichtung verwendet werden kann, wobei nach Ablauf dieses Zeitraums, also der Gültigkeitsdauer, oder nach dem Ablaufdatum der Token ungültig wird. Durch Begrenzung der Gültigkeit des Tokens kann verhindert werden, dass ein Benutzer, der einen Token erhalten hat und beispielsweise das Unternehmen verlässt, auch nach Löschen der Einträge aus dem Benutzerverwaltungsserver weiterhin auf die Behälterbehandlungsvorrichtung zugreifen kann. Ein Zugriff auf Behälterbehandlungsvorrichtungen wird somit noch sicherer gestaltet.

Gemäß einer weiteren Ausführungsform ist dem Benutzerverwaltungsserver ein Schlüsselpaar eines asymmetrischen Verschlüsselungssystems zugeordnet. Das Schlüsselpaar umfasst einen privaten Schlüssel und einen öffentlichen Schlüssel. Der private Schlüssel ist im Benutzerverwaltungssystem, insbesondere im Speicher des Benutzerverwaltungssystems, hinterlegt. Der öffentliche Schlüssel ist in der Behälterbehandlungsvorrichtung hinterlegt. Das Erzeugen des Tokens in Abhängigkeit von der Anfrage umfasst dann ferner das Signieren des Tokens mit dem privaten Schlüssel. Außerdem umfasst das Authentifizieren des mobilen Geräts bei der Behälterbehandlungsvorrichtung mit dem übertragenen Token ein Prüfen der Signatur des übertragenen Tokens mit dem öffentlichen Schlüssel. Eine Authentifizierung erfolgt somit vorzugsweise nur dann, wenn die Signatur mit dem öffentlichen Schlüssel erfolgreich verifiziert werden kann.

Es kann somit sichergestellt werden, dass der Token tatsächlich von der Behälterbehandlungsvorrichtung erzeugt wurde.

Gemäß einer weiteren Ausführungsform werden im mobilen Gerät mehrere Tokens für unterschiedliche Behälterbehandlungsvorrichtungen gespeichert. Ein Benutzer kann somit auf mehrere Behälterbehandlungsvorrichtungen ohne erneutes Abrufen eines Tokens zugreifen.

Gemäß einer weiteren Ausführungsform ist der Speicher des Benutzerverwaltungsservers gegen Umprogrammieren, also Schreibzugriffe, durch das mobile Gerät gesichert. Somit ist sichergestellt, dass ein Benutzer Einträge verändern oder manipulieren kann.

Außerdem umfasst die Erfindung einen Benutzerverwaltungsserver zum Authentifizieren eines Benutzers mit einem mobilen Gerät bei einer Behälterbehandlungsvorrichtung. Der Benutzerverwaltungsserver ist insbesondere eingerichtet, um in einem Verfahren nach einer der vorgenannten Ausführungsformen verwendet zu werden. Insbesondere ist der Benutzerverwaltungsserver dazu eingerichtet, um die auf den Benutzerverwaltungsserver bezogenen Schritte des Verfahrens nach einer der vorgenannten Ausführungsformen auszuführen.

Gemäß einer Ausführungsform ist der Benutzerverwaltungsserver eingerichtet, über eine erste Verbindung über das Internet eine Anfrage von einem mobilen Gerät zu empfangen. Die Anfrage umfasst einen, insbesondere genau einen, Personenidentifikator zur eindeutigen Identifikation des mobilen Geräts oder des Benutzers des mobilen Geräts. Außerdem umfasst die Anfrage Zugriffsinformationen mit einem, insbesondere genau einem, Anlagenidentifikator zur eindeutigen Identifikation der Behälterbehandlungsvorrichtung. Zudem ist der Benutzerverwaltungsserver eingerichtet, einen Token in Abhängigkeit von der Anfrage zu erzeugen. Ferner ist der Benutzerverwaltungsserver eingerichtet, um den erzeugten Token über die erste Verbindung über das Internet an das mobile Gerät zu übertragen.

Gemäß einer weiteren Ausführungsform weist der Benutzerverwaltungsserver einen Speicher auf, in dem mehrere Einträge hinterlegbar sind. In jedem Eintrag sind jeweils einem Personenidentifikator ein oder mehrere Zugriffsrechte für eine oder jeweils für mehrere Anlagenidentifikatoren zugewiesen oder zuweisbar. Außerdem ist der Benutzerverwaltungsserver insbesondere eingerichtet, eine Prüfung der Daten in der Anfrage in Abhängigkeit von den Einträgen, insbesondere gemäß einer Ausführungsform des Verfahrens, auszuführen und einen Token bei positiver Prüfung zu erzeugen.

Vorzugsweise umfasst das Prüfen mit dem Benutzerverwaltungsserver, ob für den in der Anfrage enthaltenen Personenidentifikator im Speicher ein Eintrag vorhanden ist, der dem Personenidentifikator ein oder mehrere Zugriffsrechte für den in den Zugriffsinformationen enthaltenen Anlagenidentifikator zuweist, die den in den Zugriffsinformationen enthaltenen benötigten Zugriffsrechten entsprechen. Vorzugsweise umfasst das Erzeugen eines Tokens in Abhängigkeit von der Anfrage, das Erzeugen des Tokens, wenn das Prüfen positiv ist, und vorzugsweise das Nichterzeugen des Tokens, wenn die Prüfung negativ ist. Das Prüfen ist positiv, wenn ein entsprechender zur Anfrage passender Eintrag vorhanden ist und das Prüfen ist negativ, wenn die benötigten Zugriffsrechte in der Anfrage nicht den Zugriffsrechten entsprechen, die einem Personenidentifikator für den Anlagenidentifikator zugewiesen sind, gar kein Eintrag für den Personenidentifikator vorhanden ist oder nur Einträge mit dem Personenidentifikator für andere Anlagenidentifikatoren als in der Anfrage vorhanden sind.

Der Benutzerverwaltungsserver ist vorzugsweise derart ausgebildet, dass die Einträge im Benutzerverwaltungsserver nur durch eine berechtigte Person geändert, gelöscht oder neu erstellt werden können. Der Benutzerverwaltungsserver ist demnach insbesondere gegen Schreibzugriffe durch unberechtigte Personen gesichert.

Der Benutzerverwaltungsserver ist außerdem gemäß einer weiteren Ausführungsform eingerichtet, um dem Token eine im jeweiligen Eintrag hinterlegte Gültigkeitsdauer oder ein Ablaufdatum zuzuordnen.

Gemäß einer weiteren Ausführungsform ist der Benutzerverwaltungsserver eingerichtet, um den Token mit einem privaten Schlüssel des Benutzerverwaltungsservers zu signieren.

Außerdem umfasst die Erfindung eine Behälterbehandlungsvorrichtung zum Authentifizieren eines Benutzers mit einem mobilen Gerät bei der Behälterbehandlungsvorrichtung. Vorzugsweise ist die Behälterbehandlungsvorrichtung eingerichtet, in einem Verfahren nach einer der vorgenannten Ausführungsformen verwendet zu werden und/oder die auf die Behälterbehandlungsvorrichtung bezogenen Schritte des Verfahrens nach einer der Ausführungsformen auszuführen.

Gemäß einer Ausführungsform ist die Behälterbehandlungsvorrichtung eingerichtet, Zugriffsinformationen, die einen Anlagenidentifikator zur eindeutigen Identifikation der Behälterbehandlungsvorrichtung zum Erzeugen einer Anfrage für ein mobiles Gerät bereitzustellen.

Gemäß einer Ausführungsform ist die Behälterbehandlungsvorrichtung eingerichtet, in Abhängigkeit von einer Benutzereingabe benötigte Zugriffsrechte zu bestimmen und als Teil der Zugriffsinformationen bereitzustellen.

Gemäß einer weiteren Ausführungsform ist die Behälterbehandlungsvorrichtung eingerichtet, die Zugriffsinformationen als oder mit einem digitalen Informationsträger, vorzugsweise als Barcode, bereitzustellen oder anzuzeigen, wobei die Behälterbehandlungsvorrichtung vorzugsweise zum Anzeigen des digitalen Informationsträgers ein Display aufweist.

Gemäß einer weiteren Ausführungsform ist die Behälterbehandlungsvorrichtung eingerichtet, einen Token von einem mobilen Gerät über eine zweite Verbindung, insbesondere mittels einer RFID-Kommunikationsverbindung, vorzugsweise einer NFC-Kommunikationsverbindung, zwischen dem mobilen Gerät und der Behälterbehandlungsvorrichtung zu empfangen.

Gemäß einer weiteren Ausführungsform ist die Behälterbehandlungsvorrichtung eingerichtet, um das mobile Gerät oder einen Benutzer des mobilen Geräts mit dem übertragenen Token bei der Behälterbehandlungsvorrichtung zu authentifizieren.

Außerdem betrifft die Erfindung ein mobiles Gerät zum Authentifizieren eines Benutzers mit dem mobilen Gerät bei einer Behälterbehandlungsvorrichtung. Vorzugsweise ist das mobile Gerät eingerichtet, in einem Verfahren nach einer der vorgenannten Ausführungsformen verwendet zu werden und/oder die auf das mobile Gerät bezogenen Schritte des Verfahrens gemäß einer der Ausführungsformen auszuführen.

Gemäß einer Ausführungsform ist das mobile Gerät eingerichtet, eine Anfrage für einen Zugriff auf die Behälterbehandlungsvorrichtung zu erzeugen, wobei die Anfrage einen, insbesondere genau einen, Personenidentifikator zur eindeutigen Identifikation des mobilen Geräts oder des Benutzers des mobilen Geräts und Zugriffsinformationen mit einem, insbesondere genau einem, Anlagenidentifikator zur eindeutigen Identifikation der Behälterbehandlungsvorrichtung umfasst.

Gemäß einer weiteren Ausführungsform ist das mobile Gerät eingerichtet, um eine erste Verbindung zwischen dem Benutzerverwaltungsserver und dem mobilen Gerät über das Internet herzustellen, die Anfrage an den Benutzerverwaltungsserver über die erste Verbindung zu senden und einen Token über die erste Verbindung und somit das Internet vom Benutzerverwaltungsserver zu empfangen, den Token zu speichern und den gespeicherten Token an die Behälterbehandlungsvorrichtung zu übertragen.

Gemäß einer weiteren Ausführungsform ist das mobile Gerät eingerichtet, um den empfangenen und gespeicherten Token mittels einer zweiten Verbindung, die einer RFID-Kommunikationsverbindung zwischen dem mobilen Gerät und der Behälterbehandlungsvorrichtung, insbesondere einer NFC-Kommunikationsverbindung, entspricht, zu übertragen.

Gemäß einer weiteren Ausführungsform ist das mobile Gerät eingerichtet, vor dem Erzeugen der Anfrage von der Behälterbehandlungsvorrichtung elektronisch, insbesondere durch Erfassen eines digitalen Informationsträgers, vorzugsweise eines Barcodes, vorzugsweise mit einer Kamera des mobilen Geräts, die Zugriffsinformationen zu erfassen.

Außerdem betrifft die Erfindung ein System zum Authentifizieren eines Benutzers mit einem mobilen Gerät bei einer Behälterbehandlungsvorrichtung. Das System ist eingerichtet, das Verfahren nach einem der Ansprüche 1 bis 10 auszuführen.

Gemäß einer Ausführungsform umfasst das System einen Benutzerverwaltungsserver nach einer der vorgenannten Ausführungsformen.

Gemäß einer weiteren Ausführungsform umfasst das System eine Behälterbehandlungsvorrichtung nach einer der vorgenannten Ausführungsformen.

Gemäß einer weiteren Ausführungsform umfasst das System ein mobiles Gerät nach einer der vorgenannten Ausführungsformen.

Ferner betrifft die Erfindung ein Computerprogrammprodukt, das Instruktionen umfasst, die wenn sie auf einem Prozessor ausgeführt werden, den Prozessor veranlassen, die Schritte, insbesondere die auf die Behälterbehandlungsvorrichtung bezogenen Schritte, die auf den Benutzerverwaltungsserver bezogenen Schritte und/oder die auf das mobile Gerät bezogenen Schritte, des Verfahrens nach einer der vorgenannten Ausführungsformen auszuführen.

Weitere Ausführungsformen ergeben sich anhand der in den Figuren näher erläuterten Ausführungsbeispiele. Hierbei zeigen:
- Fig. 1: ein System gemäß einem Ausführungsbeispiel und
- Fig. 2: Schritte eines Verfahrens gemäß einem Ausführungsbeispiel.

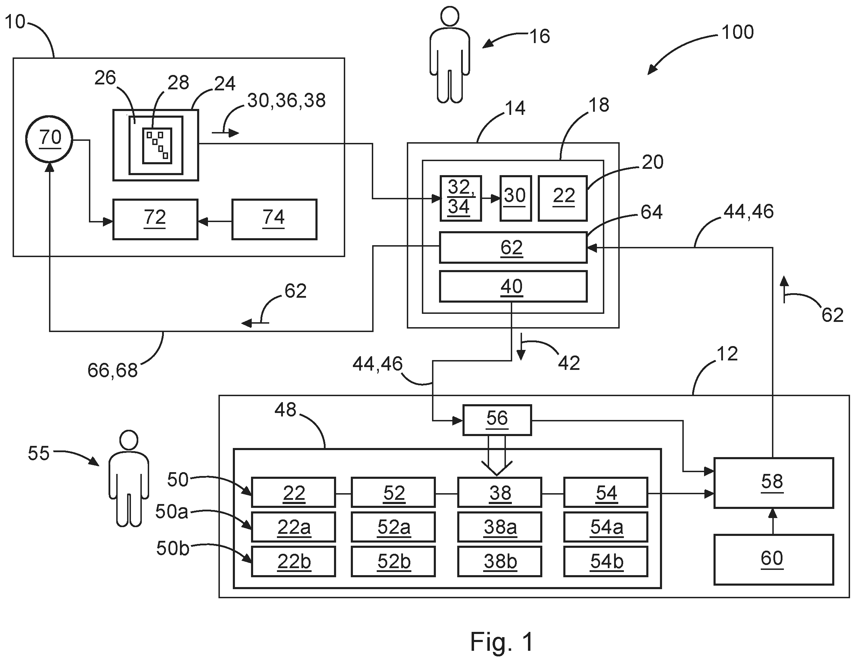

Fig. 1 zeigt ein System 100 gemäß einem Ausführungsbeispiel. Das System 100 umfasst eine Behälterbehandlungsvorrichtung 10 gemäß einem Ausführungsbeispiel der Erfindung, einen Benutzerverwaltungsserver 12 gemäß einem Ausführungsbeispiel der Erfindung sowie ein mobiles Gerät 14 gemäß einem Ausführungsbeispiel der Erfindung.

Das mobile Gerät 14 wird von einem Benutzer 16 bedient. Hierzu umfasst das mobile Gerät 14 eine Applikation 18. Die Applikation 18 ermöglicht es dem Benutzer 16 ein Benutzerkonto 20 anzulegen, in welchem der Benutzer 16 einen Personenidentifikator 22 hinterlegen kann. Das Benutzerkonto 20 ist beispielsweise durch den Benutzer 16 mit einem Benutzernamen und einem Passwort gesichert.

Die Behälterbehandlungsvorrichtung 10 umfasst eine Benutzerschnittstelle 24, in die der Benutzer 16 Eingaben machen kann. Die Benutzerschnittstelle 24 entspricht beispielsweise einer Kombination aus einem Eingabeelement, wie einer Tastatur, und einer Anzeige oder einem Touchscreen. Gemäß einer speziellen Ausführungsform sind ohne eine Authentifizierung eines Benutzers 16 an der Benutzerschnittstelle 24 der Behälterbehandlungsvorrichtung 10 keine Eingaben möglich. In diesem Fall wird mit einer Anzeige 26, sobald ein Benutzer 16 eine Eingabe tätigt und nicht authentifiziert ist, ein QR-Code 28 angezeigt. Dieser QR-Code 28 umfasst Zugriffsinformationen 30, die von einem QR-Code-Scanner 32 oder einer Kamera 34 des mobilen Geräts 14 ausgelesen werden können.

In einer alternativen Ausführungsform sind auch ohne Authentifizierung eines Benutzers 16 Eingaben möglich, wobei diese Eingaben keinen Lesezugriff oder Schreibzugriff erlauben, sondern nur anzeigen, welche Zugriffsrechte der Benutzer 16 wünscht. In diesem Fall wird der QR-Code 28 in Abhängigkeit von der Benutzereingabe des Benutzers 16 über die Benutzerschnittstelle 24 erzeugt. Es ist hierbei beispielsweise möglich, dass der Benutzer 16 durch seine Eingabe anzeigt, auf welchen von mehreren Softwareteilen der Benutzer 16 Zugriff wünscht. Entsprechend werden benötigte Zugriffsrechte 36 in die Zugriffsinformationen 30 durch Anpassen des QR-Codes 28 von der Behälterbehandlungsvorrichtung 10 eingefügt. Außerdem umfassen die Zugriffsinformationen 30 neben den benötigten Zugriffsrechten 36 einen Anlagenidentifikator 38, der eine eindeutige Identifikation der Behälterbehandlungsvorrichtung 10 ermöglicht.

Die Applikation 18 des mobilen Geräts 14 erzeugt aus den Zugriffsinformationen 30 und dem Personenidentifikator 22 mithilfe eines Berechtigungsmoduls 40 eine Anfrage 42 und sendet diese über eine erste Verbindung 44, die einer Internetverbindung 46 entspricht, an den Benutzerverwaltungsserver 12.

Im Benutzerverwaltungsserver 12 ist ein Speicher 48 bereitgestellt, der eine Vielzahl von Einträgen 50, 50a, 50b umfasst. Jeder der Einträge 50, 50a, 50b umfasst jeweils einen Personenidentifikator 22, 22a, 22b, wobei in jedem der Einträge 50 dem jeweiligen Personenidentifikator 22, 22a, 22b des jeweiligen Eintrags 50, 50a, 50b, Zugriffsrechte 52, 52a, 52b für einen jeweiligen Anlagenidentifikator 38, 38a, 38b einer Behälterbehandlungsvorrichtung 10, 10a, 10b zugeordnet ist. Außerdem ist mit jedem der Einträge 50 eine Gültigkeitsdauer 54, 54a, 54b verknüpft. Die Einträge können nur von speziell dafür berechtigten Personen 55 geändert werden.

In einem Prüfmodul 56 werden die Einträge 50 nach dem Empfang der Anfrage 42 überprüft. Es wird überprüft, ob einer der Einträge 50 den Personenidentifikator 22 der Anfrage 42 enthält. Außerdem wird geprüft, ob genau dieser Eintrag 50 der Behälterbehandlungsvorrichtung 10, die ihren Anlagenidentifikator 38 durch die Zugriffsinformationen 30 übertragen hat, zumindest die Zugriffsrechte 52 zugewiesen werden, die ebenfalls in der Anfrage 42 als benötigte Zugriffsrechte 36 enthalten sind. Ist die Prüfung positiv, gibt es also einen solchen Eintrag 50, so wird in einem Tokenerzeugungsmodul 58 ein Token erzeugt, der dem Benutzeridentifikator 22 genau die benötigten Zugriffsrechte 36 als Zugriffsrechte 52 für die mit der Anfrage 42 übersendeten Anlagenidentifikator 38 einräumt. Der Token umfasst auch die dem Eintrag 50 zugeordnete Gültigkeitsdauer 54. Der Token wird zusätzlich mit einem privaten Schlüssel 60 des Benutzerverwaltungsservers 12 signiert.

Der so erzeugte signierte Token 62 wird an das mobile Gerät 14 über die erste Verbindung 44 übertragen und in einem Tokenspeicher 64 des mobilen Geräts gespeichert.

Der Benutzer 16 kann nun mit dem mobilen Gerät über eine zweite Verbindung 66, die einer RFID-Kommunikationsverbindung 68 entspricht, den Token 62 durch ein Lesegerät 70 der Behälterbehandlungsvorrichtung 10 auslesen lassen. In einem Validierungsmodul 72 wird der Token 62 geprüft. Insbesondere wird auch die Signatur mit einem in der Behälterbehandlungsvorrichtung 10 hinterlegten öffentlichen Schlüssel 74 geprüft. Entsprechend der Zugriffsrechte 52 im Token 62 wird dann der Benutzer 16 bei der Behälterbehandlungsvorrichtung 10 authentifiziert, um Zugriffe über die Benutzerschnittstelle 24 entsprechend seiner Zugriffsrechte 52 ausführen zu können.

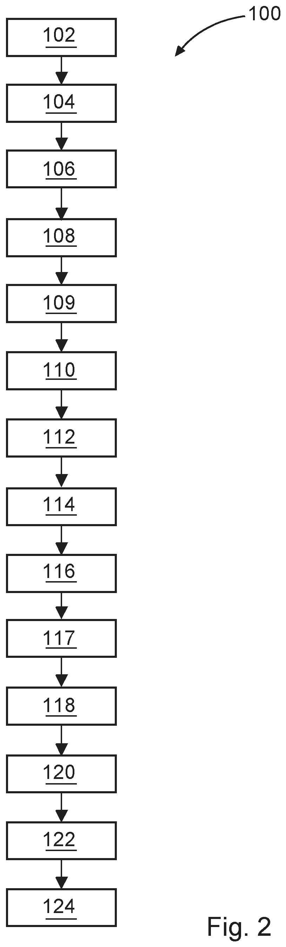

Fig. 2 zeigt die Schritte des Verfahrens 200 gemäß einem Ausführungsbeispiel.

In einem Schritt 102 wird über eine Benutzerschnittstelle 24 einer Behälterbehandlungsvorrichtung 10 eine Eingabe von einem Benutzer 16 empfangen. In einem Schritt 104 wird in Abhängigkeit von der Eingabe ein QR-Code 28 erzeugt und mit einer Anzeige 26 angezeigt. Der QR-Code 28 wird in einem Schritt 106 von einem mobilen Gerät 14 ausgelesen. Der QR-Code 28 umfasst Zugriffsrechte 30. Mit einem Personenidentifikator 20, der im mobilen Gerät 14 gespeichert ist, und mit den Zugriffsrechten, die vom mobilen Gerät ausgelesen wurden, wird in einem Schritt 108 eine Anfrage 42 im mobilen Gerät 14 erzeugt.

Nach dem Erzeugen der Anfrage 42 wird eine erste Verbindung 44, die einer Internetverbindung 46 entspricht, zwischen dem mobilen Gerät 14 und einem Benutzerverwaltungsserver 12 in einem Schritt 109 hergestellt und die Anfrage 42 an den Benutzerverwaltungsserver 12 im Schritt 110 gesendet. Im Schritt 112 erfolgt eine Prüfung der Anfrage 42 mit im Benutzerverwaltungsserver 12 hinterlegten Einträgen 50, 50a, 50b. Im Fall einer positiven Prüfung wird im Schritt 114 ein Token erzeugt und im Schritt 116 der Token 62 mit einem privaten Schlüssel 60 signiert. Der signierte Token 62 wird über die erste Verbindung 44 im Schritt 117 an das mobile Gerät 14 gesendet und im Schritt 118 im mobilen Gerät gespeichert. Über eine zweite Verbindung 66 wird im Schritt 120 der Token 62 an die Behälterbehandlungsvorrichtung 10 übertragen. In einem Schritt 122 wird der Token validiert und insbesondere geprüft, ob die Signatur gültig ist. Im Schritt 124 wird der Benutzer 16 authentifiziert.

### Bezugszeichenliste

- 10: Behälterbehandlungsvorrichtung
- 12: Benutzerverwaltungsserver
- 14: mobiles Gerät
- 16: Benutzer
- 18: Applikation
- 20: Benutzerkonto
- 22: Personenidentifikator
- 22a: Personenidentifikator
- 22b: Personenidentifikator
- 24: Benutzerschnittstelle
- 26: Anzeige
- 28: QR-Code
- 30: Zugriffsinformationen
- 32: QR-Code-Scanner
- 34: Kamera
- 36: benötigte Zugriffsrechte
- 38: Anlagenidentifikator
- 38a: Anlagenidentifikator
- 38b: Anlagenidentifikator
- 40: Berechtigungsmodul
- 42: Anfrage
- 44: erste Verbindung
- 46: Internetverbindung
- 48: Speicher
- 50: Einträge
- 52: Zugriffsrechte
- 52a: Zugriffsrechte
- 52b: Zugriffsrechte
- 54: Gültigkeitsdauer
- 54a: Gültigkeitsdauer
- 54b: Gültigkeitsdauer
- 55: speziell berechtigte Person
- 56: Prüfmodul
- 58: Tokenerzeugungsmodul
- 60: privater Schlüssel
- 62: Token
- 64: Tokenspeicher
- 66: zweite Verbindung
- 68: RFID-Kommunikationsverbindung
- 70: Lesegerät
- 72: Validierungsmodul
- 74: öffentlicher Schlüssel
- 100: System
- 102: Empfangen Eingabe
- 104: Erzeugen Strichcode
- 106: Auslesen Strichcode
- 108: Erzeugen Anfrage
- 109: Herstellen erste Verbindung
- 110: Senden Anfrage
- 112: Prüfen Anfrage
- 114: Erzeugen Token
- 116: Signieren Token
- 117: Senden Token
- 118: Speichern Token
- 120: Übertragen Token
- 122: Validieren Token
- 124: Authentifizieren Benutzer
- 200: Verfahren

## Patentansprüche

1. Verfahren zum Authentifizieren eines Benutzers (16) mit einem mobilen Gerät (14) bei einer Behälterbehandlungsvorrichtung (10), wobei das Verfahren umfasst:
- Erzeugen einer Anfrage (42) für einen Zugriff auf die Behälterbehandlungsvorrichtung (10) durch ein mobiles Gerät (14), wobei die Anfrage (42) einen Personenidentifikator (22) zur eindeutigen Identifikation des mobilen Geräts (14) oder des Benutzers (16) des mobilen Geräts (14) und Zugriffsinformationen (30) mit einem Anlagenidentifikator (38) zur eindeutigen Identifikation der Behälterbehandlungsvorrichtung (10) umfasst,
- Herstellen einer ersten Verbindung (44) zwischen einem mobilen Gerät (14) und einem Benutzerverwaltungsserver (12) über das Internet,
- Senden der Anfrage (42) an den Benutzerverwaltungsserver (12),
- Erzeugen eines Tokens (62) in Abhängigkeit von der Anfrage (42) mit dem Benutzerverwaltungsserver (12),
- Empfangen des erzeugten Tokens (62) über die erste Verbindung (44) vom Benutzerverwaltungsserver (12) durch das mobile Gerät (14),
- Speichern des Tokens (62) im mobilen Gerät (14),
- Übertragen des gespeicherten Tokens (62) durch das mobile Gerät (14) an die Behälterbehandlungsvorrichtung (10) über eine zweite Verbindung (66) zwischen dem mobilen Gerät (14) und der Behälterbehandlungsvorrichtung (10), wobei die zweite Verbindung (66) sich von der ersten Verbindung (44) unterscheidet und
- Authentifizieren des Benutzers (16) mit dem übertragenen Token (62) bei der Behälterbehandlungsvorrichtung (10).

2. Verfahren nach Anspruch 1, wobei die zweite Verbindung (66) einer RFID-Kommunikationsverbindung (68), insbesondere einer NFC-Kommunikationsverbindung, entspricht und das Übertragen des Tokens (62) mittels der RFID- Kommunikationsverbindung (68), insbesondere der NFC-Kommunikationsverbindung, zwischen dem mobilen Gerät (14) und der Behälterbehandlungsvorrichtung (10) erfolgt.

3. Verfahren nach Anspruch 1 oder 2, wobei die Zugriffsinformationen (30) von der Behälterbehandlungsvorrichtung (10) für das mobile Gerät (14) bereitgestellt werden, und vorzugsweise das mobile Gerät (14) die Zugriffsinformationen (30) vor dem Erzeugen der Anfrage (42) von der Behälterbehandlungsvorrichtung (10) elektronisch ausliest.

4. Verfahren nach einem der vorhergehenden Ansprüche, wobei die Zugriffsinformationen (30) benötigte Zugriffsrechte (36) umfassen, wobei vorzugsweise mit der Behälterbehandlungsvorrichtung (10), besonders bevorzugt in Abhängigkeit von einer Benutzereingabe, benötigte Zugriffsrechte (36) bestimmt und als Teil der Zugriffsinformationen (30) bereitgestellt werden.

5. Verfahren nach Anspruch 3 oder 4, wobei die Zugriffsinformationen (30) als digitaler Informationsträger, vorzugsweise als Barcode, insbesondere mit einem Display, der Behälterbehandlungsvorrichtung (10) bereitgestellt oder angezeigt werden.

6. Verfahren nach einem der vorhergehenden Ansprüche, wobei im Benutzerverwaltungsserver (12) ein Speicher (48) bereitgestellt ist, in dem mehrere Einträge (50) hinterlegt oder, insbesondere durch berechtigte Personen (55), hinterlegbar sind, wobei in jedem Eintrag (50) jeweils einem Personenidentifikator (22, 22a, 22b) ein oder mehrere Zugriffsrechte (52, 52a, 52b) für eine oder jeweils für mehrere Anlagenidentifikatoren (38, 38a, 38b) zugewiesen sind und
das Erzeugen eines Tokens (62) in Abhängigkeit von der Anfrage (42) umfasst:
- Prüfen mit dem Benutzerverwaltungsserver (12), ob für den in der Anfrage (42) enthaltenen Personenidentifikator (22, 22a, 22b) im Speicher (48) ein Eintrag (50) vorhanden ist, der dem Personenidentifikator (22, 22a, 22b) ein oder mehrere Zugriffsrechte (52, 52a, 52b) für den in den Zugriffsinformationen (30) enthaltene Anlagenidentifikator (38, 38a, 38b) zuweist, die den in den Zugriffsinformationen (30) enthaltenen benötigten Zugriffsrechten (36) entsprechen und
- Erzeugen des Tokens (62), wenn das Prüfen positiv ist, also ein entsprechender Eintrag, insbesondere durch eine berechtigte Person (55), hinterlegt wurde und der Eintrag daher hinterlegt ist, und vorzugsweise Nichterzeugen des Tokens (62), wenn die Prüfung negativ ist, also ein entsprechender Eintrag, insbesondere durch eine berechtigte Person (55), bislang nicht hinterlegt wurde und der Eintrag daher nicht hinterlegt ist.

7. Verfahren nach einem der vorhergehenden Ansprüche, wobei im Benutzerverwaltungsserver (12) in jedem Eintrag (50) eine Gültigkeitsdauer (54, 54a, 54b) oder ein Ablaufdatum für den Personenidentifikator (22) des Eintrags (50) hinterlegt ist und, wenn das Prüfen positiv ist, der Token (62) mit der hinterlegten Gültigkeitsdauer (54, 54a, 54b) oder dem Ablaufdatum erzeugt wird.

8. Verfahren nach einem der vorhergehenden Ansprüche, wobei dem Benutzerverwaltungsserver (12) ein Schlüsselpaar eines asymmetrischen Verschlüsselungssystems mit einem privaten Schlüssel (60) und einem öffentlichen Schlüssel (74) zugeordnet ist, wobei
der private Schlüssel (60) im Benutzerverwaltungsserver (12) und der öffentliche Schlüssel (74) in der Behälterbehandlungsvorrichtung (10) hinterlegt sind und
das Erzeugen eines Tokens (62) in Abhängigkeit von der Anfrage (42) ein Signieren des Tokens (62) mit dem privaten Schlüssel (60) umfasst und das Authentifizieren des mobilen Geräts (14) mit dem übertragenen Token (62) bei der Behälterbehandlungsvorrichtung (10) ein Prüfen der Signatur des übertragenen Tokens (62) mit dem öffentlichen Schlüssel (74) umfasst.

9. Verfahren nach einem der vorhergehenden Ansprüche, wobei im mobilen Gerät (14) mehrere Token (62) für unterschiedliche Behälterbehandlungsvorrichtung (10) gespeichert werden.

10. Verfahren nach einem der vorhergehenden Ansprüche, wobei der Speicher (48) des Benutzerverwaltungsservers (12) gegen Umprogrammieren durch das mobile Gerät (14) gesichert ist.

11. Benutzerverwaltungsserver (12) zum Authentifizieren eines Benutzers (16) mit einem mobilen Gerät (14) bei einer Behälterbehandlungsvorrichtung (10), wobei der Benutzerverwaltungsserver (12) eingerichtet ist, einen Token (62) in Abhängigkeit von einer von einem mobilen Gerät (14) über eine erste Verbindung (44) über das Internet empfangenen Anfrage (42), umfassend einen Personenidentifikator (20) zur eindeutigen Identifikation des mobilen Geräts (14) oder des Benutzers (16) des mobilen Geräts (14) und Zugriffsinformationen (30) mit einem Anlagenidentifikator (38) zur eindeutigen Identifikation der Behälterbehandlungsvorrichtung (10), zu erzeugen und den erzeugten Token (62) über die erste Verbindung (44) über das Internet an das mobile Gerät (14) zu übertragen und wobei der Benutzerverwaltungsserver (12) insbesondere eingerichtet ist, in einem Verfahren nach einem der vorhergehenden Ansprüche verwendet zu werden und/oder die auf den Benutzerverwaltungsserver (12) bezogenen Schritte des Verfahrens nach einem der vorhergehenden Ansprüche auszuführen.

12. Behälterbehandlungsvorrichtung (10) zum Authentifizieren eines Benutzers (16) mit einem mobilen Gerät (14) bei der Behälterbehandlungsvorrichtung (10), wobei die Behälterbehandlungsvorrichtung (10) eingerichtet ist, Zugriffsinformationen (30), umfassend einen Anlagenidentifikator (38) zur eindeutigen Identifikation der Behälterbehandlungsvorrichtung (10), zum Erzeugen einer Anfrage (42) für ein mobiles Gerät (14) bereitzustellen, und vorzugsweise in Abhängigkeit von einer Benutzereingabe benötigte Zugriffsrechte (36) zu bestimmen und als Teil der Zugriffsinformationen (30) bereitzustellen, und besonders bevorzugt die Zugriffsinformationen (30) als digitaler Informationsträger, vorzugsweise als Barcode, insbesondere mit einem Display, der Behälterbehandlungsvorrichtung (10) anzuzeigen und wobei die Behälterbehandlungsvorrichtung (10) eingerichtet ist, einen Token (62) von dem mobilen Gerät (14) über eine zweite Verbindung, insbesondere mittels einer RFID- Kommunikationsverbindung (68), vorzugsweise einer NFC-Kommunikationsverbindung, zwischen dem mobilen Gerät (14) und der Behälterbehandlungsvorrichtung (10), zu empfangen und den Benutzer (16) des mobilen Geräts (14) oder das mobile Gerät (14) mit dem übertragenen Token (62) bei der Behälterbehandlungsvorrichtung (10) zu authentifizieren, und wobei die Behälterbehandlungsvorrichtung (10) insbesondere eingerichtet ist, in einem Verfahren nach einem der Ansprüche 1 bis 10 verwendet zu werden und/oder die auf die Behälterbehandlungsvorrichtung (10) bezogenen Schritte des Verfahrens nach einem der Ansprüche 1 bis 10 auszuführen.

13. Mobiles Gerät (14) zum Authentifizieren eines Benutzers (16) mit dem mobilen Gerät (14) bei einer Behälterbehandlungsvorrichtung (10), wobei das mobile Gerät (14) eingerichtet ist, eine Anfrage (42) für einen Zugriff auf die Behälterbehandlungsvorrichtung (10) zu erzeugen, wobei die Anfrage (42) einen Personenidentifikator (22) zur eindeutigen Identifikation des mobilen Geräts (14) oder des Benutzers (16) des mobilen Geräts (14) und Zugriffsinformationen (30) mit einem Anlagenidentifikator (38) zur eindeutigen Identifikation der Behälterbehandlungsvorrichtung (10) umfasst, wobei das mobile Gerät (14) außerdem eingerichtet ist, um eine erste Verbindung (44) mit einem Benutzerverwaltungsserver (12) über das Internet herzustellen, die Anfrage (42) an den Benutzerverwaltungsserver (12) zu senden, einen Token (62) über das Internet vom Benutzerverwaltungsserver (12) zu empfangen, den Token (62) zu speichern und den gespeicherten Tokens (62) an die Behälterbehandlungsvorrichtung (10) über eine zweite Verbindung zu übertragen, wobei das mobile Gerät (14) vorzugsweise eingerichtet ist, den Token (62) mittels einer als RFID-Kommunikationsverbindung (68) zwischen dem mobilen Gerät (14) und der Behälterbehandlungsvorrichtung (10) ausgebildeten zweiten Verbindung, insbesondere einer NFC-Kommunikationsverbindung, zu übertragen und/oder die Zugriffsinformationen (30), umfassend den Anlagenidentifikator (38), vor dem Erzeugen der Anfrage (42) von der Behälterbehandlungsvorrichtung (10) elektronisch, insbesondere durch Erfassen eines digitalen Informationsträgers, wie vorzugsweise eines Barcodes, zu erfassen und wobei das mobile Gerät (14) insbesondere eingerichtet ist, in einem Verfahren nach einem der Ansprüche 1 bis 10 verwendet zu werden und/oder die auf das mobile Gerät (14) bezogenen Schritte des Verfahrens nach einem der Ansprüche 1 bis 10 auszuführen.

14. System (100) zum Authentifizieren eines Benutzers (16) mit einem mobilen Gerät (14) bei einer Behälterbehandlungsvorrichtung (10), wobei das System (100) eingerichtet ist, das Verfahren nach einem der Ansprüche 1 bis 10 auszuführen und/oder einen Benutzerverwaltungsserver (12) nach Anspruch 11 und/oder eine Behälterbehandlungsvorrichtung (10) nach Anspruch 12 und/oder ein mobiles Gerät (14) nach Anspruch 13 umfasst.

15. Computerprogrammprodukt das Instruktionen umfasst, die, wenn Sie auf einem Prozessor ausgeführt werden, den Prozessor veranlassen die Schritte, insbesondere die auf die Behälterbehandlungsvorrichtung (10) bezogenen Schritte, die auf den Benutzerverwaltungsserver (12) bezogenen Schritte und/oder die auf das mobile Gerät (14) bezogenen Schritte, des Verfahrens nach einem der Ansprüche 1 bis 10 ausführen.
